# EUROPEAN PATENT APPLICATION

(11) **EP 4 325 932 A1**
(43) Date of publication of application: **21.02.2024**
(21) Application number: 22819564.0
(22) Date of filing: 08.06.2022
(51) Int. Cl.: H04W 28/10

(54) **TRANSMISSION PROCESSING METHOD AND APPARATUS, AND ACCESS NETWORK NODE AND CORE NETWORK NODE**

(30) Priority: 10.06.2021 CN 202110650062
(71) Applicant: Vivo Mobile Communication Co., Ltd., Dongguan, Guangdong 523863 (CN)
(72) Inventor: JIANG, Wei, Dongguan, Guangdong 523863 (CN); SUN, Xiaodong, Dongguan, Guangdong 523863 (CN)
(74) Representative: Murgitroyd & Company
(86) International application number: PCT/CN2022/097631
(87) International publication number: WO 2022/257967

(57) **Abstract**

This application discloses a transmission processing method and apparatus, an access network node, and a core network node, and relates to the field of communication technologies. The transmission processing method in the embodiments of this application includes: obtaining, by an access network node, first information, where the first information is used for indicating a type and/or a characteristic of service data; and performing, according to the first information, transmission processing on the service data, where the service data is a data packet and/or a data frame.

## Description

### CROSS-REFERENCE TO RELATED APPLICATION

This application claims priority of Chinese Patent Application No. 202110650062.7 filed in China on June 10, 2021, which is incorporated herein by reference in its entirety.

### TECHNICAL FIELD

This application relates to the field of communication, and in particular, to a transmission processing method and apparatus, an access network node, and a core network node.

### BACKGROUND

Extended reality (Extended Reality, XR) refers to all real and virtual combined environments and human-computer interaction generated by computer technologies and wearable devices. The XR includes representative forms such as augmented reality (Augmented Reality, AR), mix reality (Mix Reality, MR), and virtual reality (Virtual Reality, VR), and interpolation regions between them. A level of a virtual world ranges from partial sensory input to fully immersive virtual reality. A key aspect of the XR is expansion of human experience, especially experience that is related to sense of existence (represented by the VR) and cognitive acquisition (represented by the AR).

For an XR multi-flow service, each flow may have an individual packet delay budget (Packet Delay Budget, PDB), an individual frame/packet size, and an individual reliability requirement. For example, an 1-frame/P-frame, a left eye/right eye buffer, and a foreground/background. Currently, different flows cannot be identified on a radio access network (Radio Access Network, RAN) side, and consequently, adaptive transmission cannot be realized.

### SUMMARY

Embodiments of this application provide a transmission processing method and apparatus, an access network node, and a core network node, which can solve a problem in the related art that different service flows cannot be identified on a RAN side, failing to realize adaptive transmission of services.

According to a first aspect, a transmission processing method is provided. The method includes:
obtaining, by an access network node, first information, where the first information is used for indicating a type and/or a characteristic of service data; and
performing, according to the first information, transmission processing on the service data, where
the service data is a data packet and/or a data frame.

According to a second aspect, a transmission processing method is provided. The method includes:
sending, by a core network node, first information to an access network node, where
the first information is used for indicating a type and/or a characteristics of service data, the first information is used for assisting the access network node in performing transmission processing on the service data, and the service data is a data packet and/or a data frame.

According to a third aspect, a transmission processing apparatus is provided, applied to an access network node, the apparatus including:
an obtaining module, configured to obtain first information, where the first information is used for indicating a type and/or a characteristic of service data; and
a processing module, configured to perform, according to the first information, transmission processing on the service data, where
the service data is a data packet and/or a data frame.

According to a fourth aspect, a transmission processing apparatus is provided, applied to a core network node, the apparatus including:
a sending module, configured to send first information to an access network node, where
the first information is used for indicating a type and/or a characteristics of service data, the first information is used for assisting the access network node in performing transmission processing on the service data, and the service data is a data packet and/or a data frame.

According to a fifth aspect, an access network node is provided, including a processor, a memory, and a program or instructions stored in the memory and executable on the processor, where when the program or the instructions are executed by the processor, steps of the method according to the first aspect are implemented.

According to a sixth aspect, an access network node is provided, including a processor and a communication interface. The processor is configured to: obtain first information, where the first information is used for indicating a type and/or a characteristic of service data; and perform, according to the first information, transmission processing on the service data, where
the service data is a data packet and/or a data frame.

According to a seventh aspect, a core network node is provided, including a processor, a memory, and a program or instructions stored in the memory and executable on the processor, where when the program or the instructions are executed by the processor, steps of the method according to the second aspect are implemented.

According to an eighth aspect, a core network node is provided, including a processor and a communication interface, where the communication interface is configured to send first information to an access network node, where
the first information is used for indicating a type and/or a characteristics of service data, the first information is used for assisting the access network node in performing transmission processing on the service data, and the service data is a data packet and/or a data frame.

According to a ninth aspect, a readable storage medium is provided, storing a program or instructions, where when the program or instructions are executed by a processor, steps of the method according to the first aspect are implemented, or steps of the method according to the second aspect are implemented.

According to a tenth aspect, a chip is provided. The chip includes a processor and a communication interface, where the communication interface is coupled to the processor, and the processor is configured to execute a program or instructions, to implement steps of the method according to the first aspect or the second aspect.

According to an eleventh aspect, a computer program/program product is provided, where the computer program/program product is stored in a storage medium and executed by at least one processor to implement steps of the method according to the first aspect or the second aspect.

In the embodiments of this application, different service flows can be identified by obtaining first information indicating a type and/or a characteristic of service data, and transmission processing on the service data is performed based on the first information, so as to realize adaptive transmission, which improves transmission efficiency and reliability of the service data.

### BRIEF DESCRIPTION OF THE DRAWINGS

FIG. 1 is a schematic flowchart 1 of a transmission processing method according to an embodiment of this application;
FIG. 2 is a schematic diagram 1 of a method of mapping a QoS flow to a DRB;
FIG. 3 is a schematic diagram 2 of a method of mapping a QoS flow to a DRB;
FIG. 4 is a schematic diagram 3 of a method of mapping a QoS flow to a DRB;
FIG. 5 is a schematic diagram 1 of modules of a transmission processing apparatus according to an embodiment of this application;
FIG. 6 is a structural block diagram of an access network node according to an embodiment of this application;
FIG. 7 is a schematic flowchart 2 of a transmission processing method according to an embodiment of this application;
FIG. 8 is a schematic diagram 2 of modules of a transmission processing apparatus according to an embodiment of this application;
FIG. 9 is a structural block diagram of a core network node according to an embodiment of this application; and
FIG. 10 is a structural block diagram of a communication device according to an embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

The specification and claims of this application, and terms "first" and "second" are used to distinguish similar objects, but are unnecessarily used to describe a specific sequence or order. It should be understood that the terms in such a way are interchangeable in proper circumstances, so that the embodiments of this application can be implemented in other orders than the order illustrated or described herein. Objects distinguished by "first", "second", and the like are usually one type, and the number of objects is not limited. For example, the first object may be one or more than one. In addition, in the specification and the claims, "and/or" means at least one of the connected objects, and the character "/" generally indicates an "or" relationship between the associated objects.

It should be noted that, the technologies described in the embodiments of this application are not limited to a Long Term Evolution (Long Term Evolution, LTE) system or an LTE-Advanced (LTE-Advanced, LTE-A) system, and may also be used in other wireless communication systems, such as, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), and Single-carrier Frequency-Division Multiple Access (Single-carrier Frequency-Division Multiple Access, SC-FDMA). The terms "system" and "network" in the embodiments of this application are often used interchangeably, and the described technology can be used not only for the above systems and radio technologies, but also for other systems and radio technologies. The following description describes a new radio (New Radio, NR) system for example objectives, and NR terms are used in most of the description below. These technologies are also applicable to applications other than NR system applications, such as a 6th generation (6th Generation, 6G) communication system.

A transmission processing method and apparatus, an access network node, and a core network node provided in the embodiments of this application are described in detail below by using some embodiments and application scenarios thereof with reference to the accompanying drawings.

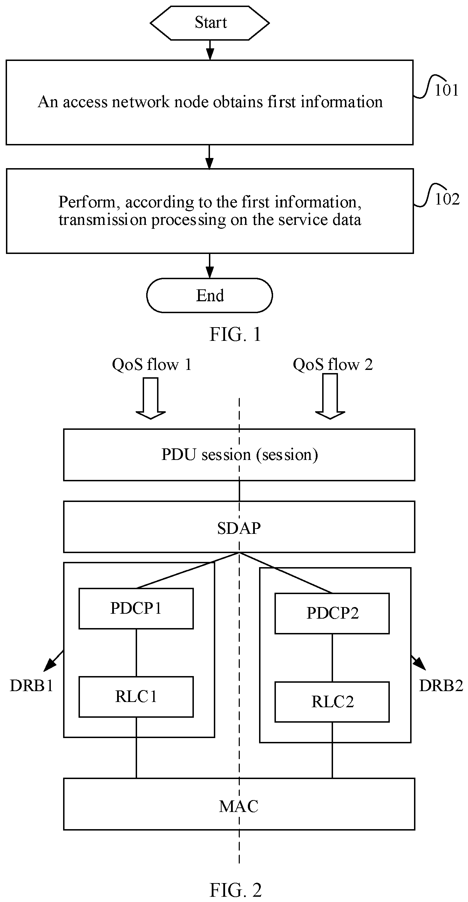

As shown in FIG. 1, an embodiment of this application provides a transmission processing method, including the following steps.

Step 101. An access network node obtains first information.

The first information is used for indicating a type and/or a characteristic of service data.

Step 102. Perform, according to the first information, transmission processing on the service data.

It should be noted that the access network node can clearly know, according to the first information, quality of service (Quality of Service, QoS) flows corresponding to the service data, and then perform transmission processing on the service data according to this information, so as to realize adaptive transmission of the service data.

It should be noted that the service data mainly refers to a data packet and/or a data frame. The service data mainly refers to XR service data transmitted when a XR service is performed. Certainly, the embodiments of this application are not limited to the XR service, and service data transmitted by other types of services also falls within the protection scope of this application.

Optionally, the first information mentioned in this embodiment of this application includes at least one of the following:
A11. QoS flow indication (QoS flow Indication, QFI).

It should be noted that the QFI corresponds to an identifier of the service data, a serial number of the service data, significance of the service data, and the like.

A12. Identifier of the service data.

It should be noted that the identifier of the service data may be an identifier of a data packet or an identifier of a data frame.

For example, an I-frame and a non-I-frame (it should be noted that a video frame is generally encoded as an I-frame and a P-frame (or B-frame), where the I-frame is an intra-frame coded frame, encoding/decoding does not refer to other frames, and the P-frame (or B-frame) is an inter-frame coded frame, encoding/decoding refers to other frames, such as the I-frame; a size of the P-frame is generally less than a size of the I-frame, and it is generally considered that a size ratio of the I-frame to the P-frame is about 3:1; I-frame/P-frame characteristics and QoS requirements such as a bit rate, reliability requirements are different; and the I-frame is more significant, a PER requirement is higher, and a QoS requirement of the P-frame is relatively low) may be identified by using 0 and 1. Optionally, 0 is used for representing the 1-frame and 1 is used for representing the non-I-frame, or optionally, 1 is used for representing the 1-frame and 0 is used for representing the non-I-frame. For example, foreground data and background data may be identified by using 0 and 1. Optionally, 0 is used for representing the foreground data and 1 is used for representing the background data, or optionally, 1 is used for representing the foreground data and 0 is used for representing the background data. For example, field of view (Field of View, FOV) data and non-FOV (non-FOV) data may be identified by using 0 and 1. Optionally, 0 is used for representing the FOV data and 1 is used for representing the non-FOV data, or optionally, 1 is used for representing the FOV data and 0 is used for representing the non-FOV data. For example, left eye data and right eye data may be identified by using 0 and 1. Optionally, 0 is used for representing the left eye data and 1 is used for representing the right eye data, or optionally, 1 is used for representing the left eye data and 0 is used for representing the right eye data. For example, a first frame data and a last frame data may be identified by using 0 and 1. Optionally, 0 is used for representing the first frame data and 1 is used for representing the last frame data, or optionally, 1 is used for representing the first frame data and 0 is used for representing the last frame data.

A13. Serial number of the service data.

For example, the serial number of the service data includes: a serial number of a data packet and/or a serial number of a data frame.

A14. Significance level of the service data.

For example, the significance level of the service data includes: a significance level of a data packet and/or a significance level of a data frame.

A15. Delay information of the service data.

For example, the delay information of the service data includes: delay information of a data packet and/or delay information of a data frame.

A16. Time stamp information of the service data.

For example, the time stamp information of the service data includes: time stamp information of a data packet and/or time stamp information of a data frame.

A17. Synchronization information of the service data.

For example, the synchronization information of the service data includes: synchronization information of a data packet and/or synchronization information of a data frame.

A18. Association relationship between different service data.

It should be noted that the association relationship may be an association relationship between data packets, for example, whether two data packets belong to a same data frame; and the association relationship may also be an association relationship between data frames, for example, whether two data frames are data frames in a same group of pictures (Group of Pictures, GOP).

A19. Serial number of a general packet radio service tunneling protocol of a user plane (GTP-U).

Optionally, a possible implementation of step 102 in this embodiment of this application is:
performing, according to a radio transmission policy, transmission processing on the service data, where
the radio transmission policy includes at least one of the following:

B11. Preferentially transmit service data with a first priority.

It should be noted that the first priority may be a high priority, or a preset specific priority.

For example, using an example in which a data packet with a high priority is preferentially transmitted, in this case, at least one of the following may be included.

B111. Transmit the I-frame prior to the non-I-frame (P-frame or B-frame).

B112. Transmit the foreground data prior to the background data.

B113. Transmit the FOV data prior to the non-FOV data.

B114. Transmit low-definition data prior to high-definition data.

B115. Transmit data with an earlier time stamp prior to data with a later time stamp.

B12. Preferentially transmit service data with first significance.

It should be noted that the first significance may be high significance, or preset service data with a specific requirement.

For example, using an example in which a data packet with high significance is preferentially transmitted, in this case, at least one of the following may be included.

B121. Transmit the I-frame prior to the non-I-frame (P-frame or B-frame).

B122. Transmit the foreground data prior to the background data.

B123. Transmit the FOV data prior to the non-FOV data.

B124. Transmit low-definition data prior to high-definition data.

B125. Transmit data with an earlier time stamp prior to data with a later time stamp.

B13. Jointly transmit associated service data.

For example, the associated service data may include at least one of the following:
B131. left eye data or right eye data belonging to a same frame image;
B132. data with a same time stamp or within a certain range;
B133. foreground data/background data belonging to a same frame image; and
B134. FOV data/non-FOV data belonging to a same frame image.

B14. Delay scheduling first service data.

It should be noted that the first service data may be service data with lower significance or a lower priority.

It should be further noted that, in this case, the radio transmission policy further includes: scheduling the first service data and third service data together.

It should be noted that the third service data may be service data with higher significance or a higher priority, for example, the first service data is a non-emergency service, and the third service data is an emergency service, that is, transmission of the non-emergency service is delayed, and the non-emergency service and the emergency service are scheduled together; and the third service data may also be data associated with the first service data, for example, the first service data is left eye data, the third service data is right eye data belonging to the same frame as the left eye data, that is, scheduling of the left eye data is delayed, and the left eye data and the associated right eye data are scheduled together; or the first service data is right eye data, and the third service data is left eye data belonging to the same frame as the right eye data, that is, scheduling of the right eye data is delayed, and the right eye data and the associated left eye data are scheduled together.

B15. Discard second service data.

It should be noted that the second service data may be incomplete data, for example, a non-I-frame associated with a lost 1-frame, that is, scheduling of the non-I-frame associated with the lost I-frame is discarded; and the second service data may also be data with a lower priority or lower significance, for example, background data and non-FOV data, that is, transmission of some background data or non-FOV data is discarded.

It should be further noted that for uplink data, the access network node can determine the first information according to the service data sent by the terminal, while for downlink data, the access network node does not need to determine the first information, and may only need to obtain the first information from the core network node. A specific implementation can adopt at least one of the following steps.

C11. Receive a QoS flow (QoS flow) sent by the core network node, where the QoS flow carries the first information.

It should be noted that in this case, the core network node needs to first generate the first information, and then maps the service data according to the first information to obtain the QoS flow, and the core network node needs to add the first information to the QoS flow, and then sends the QoS flow to the access network node.

It should be noted that, the first information directly generated by the core network node usually includes at least one of A12 to A19. After mapping the service data according to the directly generated first information to obtain the QoS flow, the core network node obtains a QFI corresponding to the QoS flow, that is, in this case, the core network node obtains the QoS flow by performing mapping according to the directly generated first information, obtains first information sent to the access network node (in this case, the first information refers to A11), and notifies the access network node of A11 by using the QoS flow.

It should be further noted that, a main implementation of performing, by the core network node according to the first information, mapping on the service data to obtain the QoS flow is: mapping, according to a preset mapping rule, the service data to the QoS flow, where
the preset mapping rule includes: mapping service data with a first priority to a target QoS flow, where
the target QoS flow is a first QoS flow, or the target QoS flow is a QoS flow corresponding to a first QFI.

It should be noted that the service data with the first priority may be service data with a high priority, the first QoS flow is a preset QoS flow with a high priority, and the QoS flow of the first QFI is a QoS with a smaller/lower QFI value. That is, the preset mapping rule is to map high-priority service data to a high-priority QoS flow or a QoS flow with a smaller/lower QFI value.

For example, an I-frame is mapped to a first QoS flow, and a non-I-frame is mapped to a second QoS flow; or an I-frame is mapped to a QoS flow in which QFI = 1, and a non-I-frame is mapped to a QoS flow in which QFI = 2.

For example, FoV data is mapped to a first QoS flow, and non-FoV data is mapped to a second QoS flow; or FoV data is mapped to a QoS flow in which QFI = 1, and non-FoV data is mapped to a QoS flow in which QFI = 2.

For example, a video frame is divided into a plurality of QoS flows according to an angle from a center of a visual axis: a priority of a smaller angle is higher, and data is mapped to the first QoS flow or the QoS flow in which QFI = 1; and conversely, the priority is low.

C12. Receive a GTP-U message sent by the core network node, where a header of the GTP-U message carries the first information.

It should be noted that in this case, the core network node needs to first generate the first information, insert the first information into a header of the GTP-U message, and then send the GTP-U message to the access network node. The access network node receives the GTP-U message, parses the first information (where the first information usually includes at least one of A12 to A19) in the header of the GTP-U message, so as to learn a type and/or a characteristic of service data of a QoS flow corresponding to the GTP-U message, and map the QoS flow to a corresponding bearer.

C13. Receive first information sent by the core network node through a core access and mobility management function (Core Access and Mobility Management Function, AMF).

It should be noted that in this case, the core network node needs to first generate first information, and then directly send the first information to the access network node. When sending the first information, the first information is sent through the AMF.

It should be noted that in this case, the first information mainly refers to at least one of A12 to A19, for example, after receiving a serial number of a GTP-U, the access network node maps a QoS flow corresponding to the GTP-U to a corresponding radio bearer.

It should be further noted that a main implementation process of generating the first information by the core network node mentioned in this embodiment of this application is as follows:
parsing information about a second protocol header of the service data to generate the first information, where
the second protocol header includes at least one of the following:
   D11. a slice (Slice) header;
   D12. a network abstract layer (Network Abstract Layer, NAL) header;
   D13. a real-time transport protocol (Real-time Transport Protocol, RTP) header;
   D14. a user datagram protocol (User Datagram Protocol, UDP) header;
   D15. a transmission control protocol (Transmission Control Protocol, TCP) header; and
   D16. an Internet Protocol (Internet Protocol, IP) header.

Optionally, it should be further noted that before performing transmission processing on the service data according to the first information, the access network node needs to first perform mapping on the service data, and a specific implementation process is as follows:
mapping, according to a preset rule, a QoS flow of the service data to a radio bearer.

For example, the radio bearer herein may be a data radio bearer (Data Radio Bearer, DRB). That is, the access network node first maps the QoS flow corresponding to the service data to the DRB before performing transmission processing.

It should be noted that the preset rule includes at least one of the following:

E11. Map QoS flows with different requirements to different radio bearers based on the first information, where the radio bearers are in a one-to-one correspondence with radio link control (Radio Link Control, RLC) entities.

It should be noted that in this case, a set of transmission paths corresponds to one radio bearer. The set of transmission paths refers to a transmission path formed by a protocol data unit (Protocol Data Unit, PDU) session (session), a service data adaptation protocol (Service Data Adaptation Protocol, SDAP), a packet data convergence protocol (Packet Data Convergence Protocol, PDCP), radio link control (Radio Link Control, RLC), and Media Access Control (Medium Access Control, MAC).

For example, a set of transmission paths corresponds to one DRB, and QoS flows with different requirements are mapped to different DRBs based on the first information. Different DRBs correspond to respective RLC entities, and the access network node implements different radio transmissions policies for different transmission paths.

Taking an I-frame and a non-I-frame as an example, the I-frame is mapped to a QoS flow1, the non-I-frame is mapped to a QoS flow2, the QoS flow1 is mapped to a transmission path at which a DRB1 is located, the QoS flow2 is mapped to a transmission path at which a DRB2 is located, and a base station preferentially schedules data on the transmission path at which the DRB1 is located.

### Application situation 1

The core network node identifies the I-frame and the non-I-frame through in-depth parsing on an application data packet, maps the I-frame to the QoS flow1, maps the non-I-frame to the QoS flow2, maps the QoS flow1 to the transmission path at which the DRB1 is located, that is a transmission path formed by a PDU session, a SDAP, a PDCP1, a RLC1, and MAC, and maps the QoS flow2 to the transmission path at which the DRB2 is located, that is, a transmission path formed by a PDU session, a SDAP, a PDCP2, a RLC2, and MAC. For a specific mapping situation, refer to FIG. 2.

It should be noted that rules for mapping high-priority data (for example, the I-frame) to the QoS flow1, mapping low-priority data (for example, the non-I-frame) to the QoS flow2, mapping the QoS flow1 to the transmission path at which the DRB1 is located, and mapping the QoS flow2 to the transmission path at which the DRB2 is located are pre-defined and are known to the access network node. The access network node preferentially schedules the data on the transmission path at which the DRB1 is located.

E12. Map QoS flows with different requirements to a same radio bearer, and map service data with different QoS requirements to different RLC entities based on the first information, where one radio bearer corresponds to a plurality of RLC entities.

It should be noted that in this case, at least two sets of transmission paths correspond to one radio bearer.

For example, a plurality of sets of transmission paths correspond to one DRB, QoS flows with different requirements are mapped to a same DRB, the same DRB corresponds to different RLC entities, data with different QoS requirements is mapped to different RLC entities based on the first information, and then the access network node implements different radio transmission policies for different transmission paths.

Taking the I-frame and the non-I-frame as an example, the I-frame is mapped to a QoS flow1, the non-I-frame is mapped to a QoS flow2, the QoS flow1 and the QoS flow2 are mapped to a same DRB, and data is allocated to different RLC entities based on information such as a QFI/a priority/significance. I-frame data is allocated to the RLC1, and non-I-frame data is allocated to the RLC2. The base station preferentially schedules data on the transmission path at which the RLC1 is located.

### Application situation 2

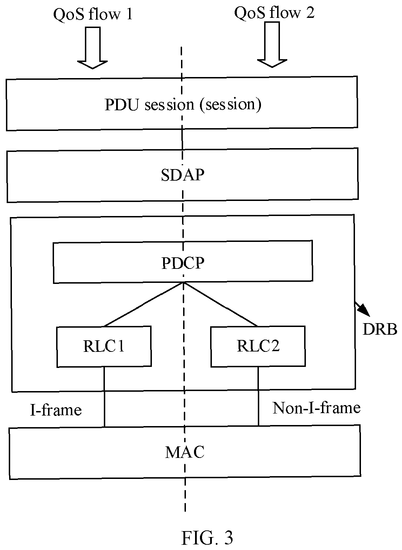

The core network node identifies an I-frame and a non-I-frame through in-depth parsing on an application data packet, maps the I-frame to a QoS flow1, maps the non-I-frame to a QoS flow2, and maps the QoS flow1 and the QoS flow2 to a same DRB. The access network node allocates I-frame data to RLC1 by parsing the first information carried in a GTP-U protocol header, and allocates non-I-frame data to RLC2. The specific mapping situation can be referred to FIG. 3, which includes a transmission path composed of a PDU session, SDAP, PDCP, RLC1, and MAC, and a transmission path composed of a PDU session, SDAP, PDCP, RLC2, and MAC.

It should be noted that rules for allocating high-priority data (for example, the I-frame) to the RLC1, and allocating low-priority data (for example, the non-I-frame) to the RLC2 are pre-defined and are known to the access network node. The access network node preferentially schedules data on a transmission path at which the RLC1 is located.

E13. Map QoS flows with different requirements to a same radio bearer, and configure different transmission configurations for service data with different QoS requirements based on the first information.

That is, in this case, QoS flows with different requirements are mapped to a same DRB, one DRB corresponds to one RLC entity, and different transmission configurations (mainly including a time-frequency resource, a cycle, and the like) are configured for data with different QoS requirements based on the first information.

Taking the I-frame and the non-I-frame as an example, a transmission config1 (config1) is configured for the I-frame data, and a transmission config2 (config2) is configured for the non-I-frame data, and a MAC layer determines, based on information such as a QFI/a priority/significance, which set of configuration to perform on the received data.

### Application situation 3

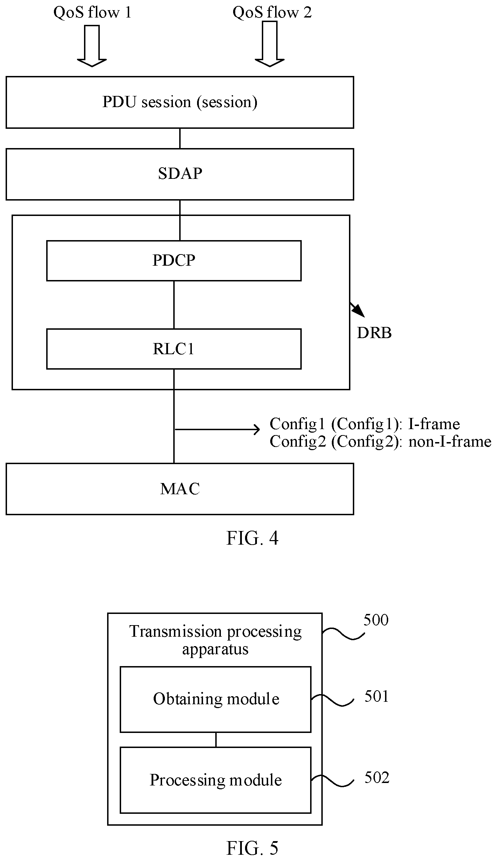

A config1 is pre-configured for high-priority data (for example, the I-frame), and a config2 is pre-configured for low-priority data (for example, the non-I-frame). For a specific mapping situation, refer to FIG. 4.

The access network node determines to execute the config1 or config2 on the received data by parsing the first information carried in the GTP-U protocol header or receiving information delivered by the AMF.

It should be noted that in the embodiments of this application, different service flows can be identified by obtaining the first information indicating the type and/or the characteristic of the service data, and the transmission processing on the service data is performed based on the first information, so as to realize adaptive transmission, which improves transmission efficiency and reliability of the service data.

It should be noted that the transmission processing method provided in this embodiment of this application may be executed by a transmission processing apparatus, or a control module configured to execute the transmission processing method in the transmission processing apparatus. In this embodiment of this application, an example in which the transmission processing apparatus executes the transmission processing method is taken as an example to illustrate the transmission processing apparatus provided in this embodiment of this application.

As shown in FIG. 5, an embodiment of this application provides a transmission processing apparatus 500, including:
an obtaining module 501, configured to obtain first information, where the first information is used for indicating a type and/or a characteristic of service data; and
a processing module 502, configured to perform, according to the first information, transmission processing on the service data, where
the service data is a data packet and/or a data frame.

Optionally, the first information includes at least one of the following:
a quality of service flow indication QFI;
an identifier of the service data;
a serial number of the service data;
a significance level of the service data;
delay information of the service data;
time stamp information of the service data;
synchronization information of the service data;
an association relationship between different service data; and
a serial number of a general packet radio service tunneling protocol of a user plane GTP-U.

Optionally, the processing module 502 is configured to:
perform, according to a radio transmission policy, transmission processing on the service data, where
the radio transmission policy includes at least one of the following:
   preferentially transmitting service data with a first priority;
   preferentially transmitting service data with first significance;
   transmitting jointly associated service data;
   delay scheduling first service data; and
   discarding second service data.

Optionally, in a case that the radio transmission policy includes the delay scheduling the first service data, the radio transmission policy further includes: scheduling the first service data and third service data together.

Optionally, before the processing module 502 performs, according to the first information, transmission processing on the service data, the apparatus further includes:
a mapping module, configured to map, according to a preset rule, a quality of service QoS flow of the service data to a radio bearer, where
the preset rule includes at least one of the following:
   mapping, based on the first information, QoS flows with different requirements to different radio bearers, where the radio bearers are in a one-to-one correspondence with radio link control RLC entities;
   mapping QoS flows with different requirements to a same radio bearer, and mapping, based on the first information, service data with different QoS requirements to different RLC entities, where one radio bearer corresponds to a plurality of RLC entities; and
   mapping QoS flows with different requirements to a same radio bearer, and configuring, based on the first information, different transmission configurations for service data with different QoS requirements.

Optionally, the obtaining module 501 is configured to perform at least one of the following:
receiving a QoS flow sent by a core network node, where the QoS flow carries the first information;
receiving a GTP-U message sent by a core network node, where a header of the GTP-U message carries the first information; and
receiving first information sent by a core network node through a core access and mobility management function AMF.

It should be noted that different service flows can be identified by obtaining the first information indicating the type and/or the characteristic of the service data, and the transmission processing on the service data is performed based on the first information, so as to realize adaptive transmission, which improves transmission efficiency and reliability of the service data.

The transmission processing apparatus in this embodiment of this application may be an apparatus, an apparatus or an electronic device with an operating system, or a component, an integrated circuit, or a chip in an electronic device. The apparatus or the electronic device is mainly a non-mobile terminal. For example, the non-mobile terminal may be a server, a network attached storage (Network Attached Storage, NAS), a personal computer (Personal Computer, PC), a television (Television, TV), a teller machine, or a self-service machine, and the like, and the embodiments of this application are not specifically limited.

The transmission processing apparatus provided in the embodiments of this application can implement all processes implemented by the method embodiments of FIG. 1, and the same technical effects are achieved. To avoid repetition, details are not described herein again.

An embodiment of this application further provides an access network node, including a processor and a communication interface. The processor is configured to: obtain first information, where the first information is used for indicating a type and/or a characteristic of service data; and perform, according to the first information, transmission processing on the service data, where
the service data is a data packet and/or a data frame.

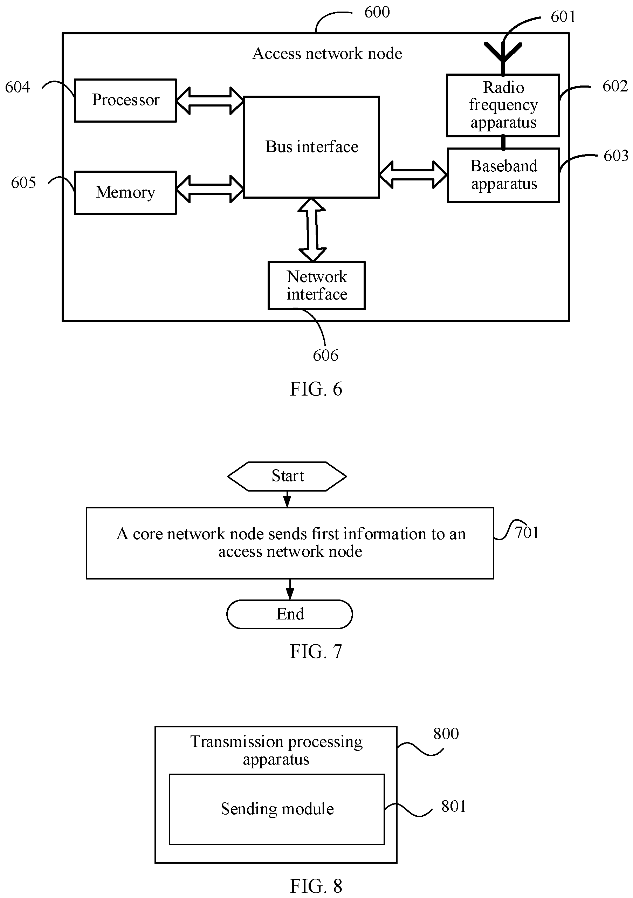

The access network node embodiment corresponds to the foregoing access network node side method embodiment, and the various implementation processes and implementations of the foregoing method embodiments may be applied to the access network node embodiment, and can achieve the same technical effect. Specifically, FIG. 6 is a schematic diagram of a hardware structure of an access network node that implements the embodiments of this application.

An access network node 600 includes an antenna 601, a radio frequency apparatus 602, and a baseband apparatus 603. The antenna 601 is connected to the radio frequency apparatus 602. In an uplink direction, the radio frequency apparatus 602 receives information by using the antenna 601, and sends the received information to the baseband apparatus 603 for processing. In a downlink direction, the baseband apparatus 603 processes to-be-sent information, and sends the information to the radio frequency apparatus 602. The radio frequency apparatus 602 processes the information and sends the information by using the antenna 601.

The foregoing frequency band processing apparatus can be located in the baseband apparatus 603, and the method executed by the network side device in the foregoing embodiment can be implemented in the baseband apparatus 603. The baseband apparatus 603 includes a processor 604 and a memory 605.

The baseband apparatus 603 may include, for example, at least one baseband plate. A plurality of chips are disposed on the baseband plate. As shown in FIG. 6, one of the plurality of chips is, for example, the processor 604, and is connected to the memory 605, to invoke a program in the memory 605 to perform operations of the core network node in the foregoing method embodiment.

The baseband apparatus 603 may further include a network interface 606, configured to exchange information with the radio frequency apparatus 602. The interface is, for example, a common public radio interface (Common Public Radio Interface, CPRI for short).

Specifically, the access network node of this embodiment of this application further includes: instructions or a program stored in the memory 605 and executable on the processor 604. The processor 604 invokes the instructions or the program in the memory 605 to execute the methods executed by each module shown in FIG. 5, and can achieve the same technical effects. To avoid repetition, details are not described herein again.

Preferably, an embodiment of this application further provides an access network node, including a processor, a memory, and a program or instructions stored in the memory and executable on the processor. When the program or instructions are executed by the processor, all processes of the embodiments of the transmission processing method are implemented, and the same technical effects can be achieved. To avoid repetition, details are not described herein again.

An embodiment of this application further provides a readable storage medium, storing a program or instructions. When the program or the instructions are executed by a processor, all processes of the embodiments of the transmission processing method are implemented, and the same technical effects can be achieved. To avoid repetition, details are not described herein again. The computer-readable storage medium is, for example, a read-only memory (Read-Only Memory, ROM for short), a random access memory (Random Access Memory, RAM for short), a magnetic disk, an optical disc or the like.

As shown in FIG. 7, an embodiment of this application further provides a transmission processing method, including:

Step 701. A core network node sends first information to an access network node.

The first information is used for indicating a type and/or a characteristics of service data, the first information is used for assisting the access network node in performing transmission processing on the service data, and the service data is a data packet and/or a data frame.

Optionally, before the sending, by a core network node, first information to an access network node, the method further includes:
parsing the service data to generate the first information.

Optionally, the parsing the service data to generate the first information includes:
parsing information about a second protocol header of the service data to generate the first information, where
the second protocol header includes at least one of the following:
   a slice header;
   a network abstract layer NAL header;
   a real-time transport protocol RTP header;
   a user datagram protocol UDP header;
   a transmission control protocol TCP header; and
   an Internet Protocol IP header.

Optionally, the sending, by a core network node, first information to an access network node includes at least one of the following:
performing, according to the first information, mapping on the service data to obtain a quality of service QoS flow, and sending, to the access network node, the QoS flow obtained through mapping, where the QoS flow carries the first information;
sending a general packet radio service tunneling protocol of a user plane GTP-U message to the access network node, where a header of the GTP-U message carries the first information; and
sending the first information to the access network node through a core access and mobility management function AMF.

Optionally, the performing, according to the first information, mapping on the service data to obtain a QoS flow includes:
mapping, according to a preset mapping rule, the service data to the QoS flow, where
the preset mapping rule includes: mapping service data with a first priority to a target QoS flow, where
the target QoS flow is a first QoS flow, or the target QoS flow is a QoS flow corresponding to a first QoS flow indication QFI.

Optionally, the first information includes at least one of the following:
a quality of service flow indication QFI;
an identifier of the service data;
a serial number of the service data;
a significance level of the service data;
delay information of the service data;
time stamp information of the service data;
synchronization information of the service data;
an association relationship between different service data; and
a serial number of a GTP-U.

It should be noted that all the descriptions about the core network node side in the foregoing embodiment are applicable to this embodiment, and can also achieve the same technical effect as the foregoing embodiment, and will not be repeated here.

As shown in FIG. 8, an embodiment of this application further provides a transmission processing apparatus 800, including:
a sending module 801, configured to send first information to an access network node, where
the first information is used for indicating a type and/or a characteristics of service data, the first information is used for assisting the access network node in performing transmission processing on the service data, and the service data is a data packet and/or a data frame.

Optionally, before the sending module 801 sends the first information to the access network node, the apparatus further includes:
a generation module, configured to parse the service data to generate the first information.

Optionally, the generation module is configured to:
parse information about a second protocol header of the service data to generate the first information, where
the second protocol header includes at least one of the following:
   a slice header;
   a network abstract layer NAL header;
   a real-time transport protocol RTP header;
   a user datagram protocol UDP header;
   a transmission control protocol TCP header; and
   an Internet Protocol IP header.

Optionally, the sending module 801 is configured to perform at least one of the following:
performing, according to the first information, mapping on the service data to obtain a quality of service QoS flow, and sending, to the access network node, the QoS flow obtained through mapping, where the QoS flow carries the first information;
sending a general packet radio service tunneling protocol of a user plane GTP-U message to the access network node, where a header of the GTP-U message carries the first information; and
sending the first information to the access network node through a core access and mobility management function AMF.

Optionally, a manner of performing, according to the first information, mapping on the service data to obtain a quality of service QoS flow includes:
mapping, according to a preset mapping rule, the service data to the QoS flow, where
the preset mapping rule includes: mapping service data with a first priority to a target QoS flow, where
the target QoS flow is a first QoS flow, or the target QoS flow is a QoS flow corresponding to a first QoS flow indication QFI.

Optionally, the first information includes at least one of the following:
a quality of service flow indication QFI;
an identifier of the service data;
a serial number of the service data;
a significance level of the service data;
delay information of the service data;
time stamp information of the service data;
synchronization information of the service data;
an association relationship between different service data; and
a serial number of a GTP-U.

It should be noted that the apparatus embodiment is an apparatus corresponding to the foregoing transmission processing method embodiment one by one, and all implementations of the foregoing method embodiment can be applied to the apparatus embodiment, and can achieve the same technical effect.

Preferably, an embodiment of this application further provides a core network node, including a processor, a memory, and a program or instructions stored in the memory and executable on the processor. When the program or instructions are executed by the processor, all processes of the embodiments of the transmission processing method applied to a core network node side are implemented, and the same technical effects can be achieved. To avoid repetition, details are not described herein again.

An embodiment of this application further provides a readable storage medium, storing a program or instructions. When the program or the instructions are executed by a processor, all processes of the embodiments of the transmission processing method applied to a core network node are implemented, and the same technical effects can be achieved. To avoid repetition, details are not described herein again.

The computer-readable storage medium is, for example, a read-only memory (Read-Only Memory, ROM for short), a random access memory (Random Access Memory, RAM for short), a magnetic disk, an optical disc or the like.

An embodiment of this application further provides a core network node, including a processor and a communication interface, where the communication interface is configured to send first information to an access network node, where
the first information is used for indicating a type and/or a characteristics of service data, the first information is used for assisting the access network node in performing transmission processing on the service data, and the service data is a data packet and/or a data frame.

The core network node embodiment corresponds to the foregoing core network node side method embodiment, and the various implementation processes and implementations of the foregoing method embodiments can be applied to the core network node embodiment, and can achieve the same technical effect.

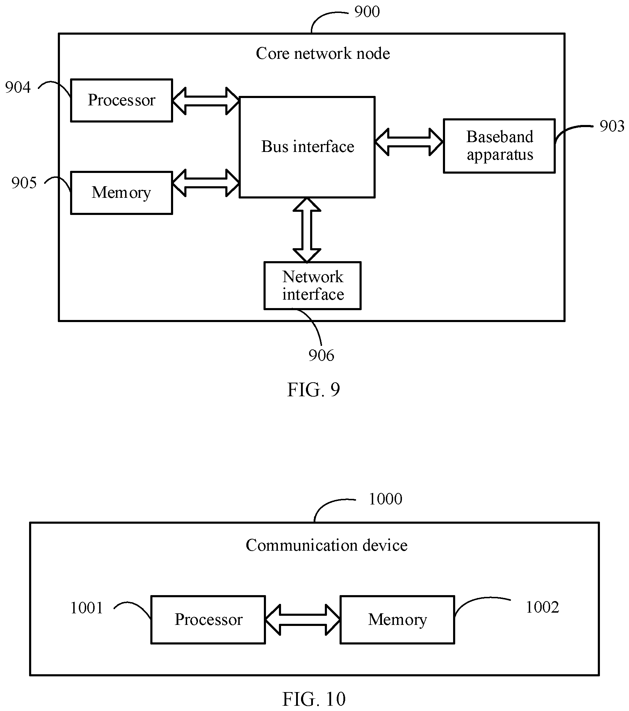

Specifically, an embodiment of this application further provides a core network node. As shown in FIG. 9, a core network node 900 includes: a baseband apparatus 903, where the baseband apparatus 903 processes to-be-sent information.

A frequency band processing apparatus can be located in the baseband apparatus 903, and the method executed by the communication device in the foregoing embodiment can be implemented in the baseband apparatus 903. The baseband apparatus 903 includes a processor 904 and a memory 905.

The baseband apparatus 903 may include, for example, at least one baseband plate. A plurality of chips are disposed on the baseband plate. As shown in FIG. 9, one of the plurality of chips is, for example, the processor 904, and is connected to the memory 905, to invoke a program in the memory 905 to perform operations of the transmission processing method at the core network node side in the foregoing method embodiment.

The baseband apparatus 903 may further include a network interface 906, and the interface is, for example, a common public radio interface (Common Public Radio Interface, CPRI for short).

Specifically, the communication device of this embodiment of this application further includes: instructions or a program stored in the memory 905 and executable on the processor 904. The processor 904 invokes the instructions or the program in the memory 905 to execute the methods executed by each module shown in FIG. 8, and can achieve the same technical effects. To avoid repetition, details are not described herein again.

Optionally, as shown in FIG. 10, an embodiment of this application further provides a communication device 1000, including a processor 1001, a memory 1002, and a program or instructions stored in the memory 1002 and executable on the processor 1001. For example, when the communication device 1000 is a terminal, and when the program or the instructions are executed by the processor 1001, all processes of the transmission processing method embodiment are implemented, and the same technical effects can be achieved. When the communication device 1000 is an access network node, and when the program or the instructions are executed by the processor 1001, all processes of the transmission processing method embodiment are implemented, and the same technical effects can be achieved. To avoid repetition, details are not described herein again. When the communication device 1000 is a core network node, and when the program or the instructions are executed by the processor 1001, all processes of the transmission processing method embodiment are implemented, and the same technical effects can be achieved. To avoid repetition, details are not described herein again.

For example, the access network node in this embodiment of this application may be a base transceiver station (Base Transceiver Station, BTS for short) in the Global System of Mobile communication (Global System of Mobile communication, GSM for short) or Code Division Multiple Access (Code Division Multiple Access, CDMA for short), or may be a NodeB (NodeB, NB for short) in a Wideband Code Division Multiple Access (Wideband Code Division Multiple Access, WCDMA for short), or may be an evolutional NodeB (Evolutional Node B, eNB or eNodeB for short) in LTE, or may be a relay station or an access point, or may be a base station in a future 5G network, or the like. This is not limited herein.

An embodiment of this application further provides a chip, including: a processor and a communication interface, where the communication interface is coupled to the processor, and the processor is configured to execute a program or instructions, to implement all processes of the embodiments of the foregoing transmission processing method, and can achieve the same technical effects. To avoid repetition, details are not described herein again.

It should be understood that, the chip described in the embodiments of this application may also be referred to as a system-level chip, a system chip, a chip system, a system on chip, or the like.

It should be noted that in this specification, "include", "comprise", and any variants are intended to cover a non-exclusive inclusion. Therefore, in the context of a process, method, object, or apparatus that includes a series of elements, the process, method, object, or device not only includes such elements, but also includes other elements not specified expressly, or may include inherent elements of the process, method, object, or apparatus. Without more limitations, elements defined by the sentence "including one" does not exclude that there are still other same elements in the processes, methods, objects, or apparatuses. In addition, it should be noted that, the scope of the method and apparatus in the embodiments of this application is not limited to performing functions in the order shown or discussed, and it may further include performing the functions in a substantially simultaneous manner or in reverse order according to the functions involved. For example, the described method may be performed in a different order than described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the reflected technologies may be implemented in the form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art may make various variations without departing from the scope of this application and the protection of the claims, and such variations shall fall within the protection of this application.

## Claims

1. A transmission processing method, comprising:
obtaining, by an access network node, first information, wherein the first information is used for indicating a type and/or a characteristic of service data; and
performing, according to the first information, transmission processing on the service data; wherein
the service data is a data packet and/or a data frame.

2. The method according to claim 1, wherein the first information comprises at least one of following:
a quality of service flow indication QFI;
an identifier of the service data;
a serial number of the service data;
a significance level of the service data;
delay information of the service data;
time stamp information of the service data;
synchronization information of the service data;
an association relationship between different service data; and
a serial number of a general packet radio service tunneling protocol of a user plane GTP-U.

3. The method according to claim 1, wherein the performing transmission processing on the service data comprises:
performing, according to a radio transmission policy, the transmission processing on the service data; wherein
the radio transmission policy comprises at least one of following:
preferentially transmitting service data with a first priority;
preferentially transmitting service data with first significance;
transmitting jointly associated service data;
delay scheduling first service data; and
discarding second service data.

4. The method according to claim 3, wherein in a case that the radio transmission policy comprises the delay scheduling the first service data, the radio transmission policy further comprises: scheduling the first service data and third service data together.

5. The method according to claim 1, wherein before the performing, according to the first information, transmission processing on the service data, the method further comprises:
mapping, according to a preset rule, a quality of service QoS flow of the service data to a radio bearer; wherein
the preset rule comprises at least one of following:
mapping, based on the first information, QoS flows with different requirements to different radio bearers, wherein the radio bearers are in a one-to-one correspondence with radio link control RLC entities;
mapping QoS flows with different requirements to a same radio bearer, and mapping, based on the first information, service data with different QoS requirements to different RLC entities, wherein one radio bearer corresponds to a plurality of RLC entities; and
mapping QoS flows with different requirements to a same radio bearer, and configuring, based on the first information, different transmission configurations for service data with different QoS requirements.

6. The method according to claim 1, wherein the obtaining, by an access network node, first information comprises at least one of following:
receiving a QoS flow sent by a core network node, wherein the QoS flow carries the first information;
receiving a GTP-U message sent by a core network node, wherein a header of the GTP-U message carries the first information; and
receiving the first information sent by a core network node through a core access and mobility management function AMF.

7. A transmission processing method, comprising:
sending, by a core network node, first information to an access network node; wherein
the first information is used for indicating a type and/or a characteristics of service data, the first information is used for assisting the access network node in performing transmission processing on the service data, and the service data is a data packet and/or a data frame.

8. The method according to claim 7, wherein before the sending, by a core network node, first information to an access network node, the method further comprises:
parsing the service data to generate the first information.

9. The method according to claim 8, wherein the parsing the service data to generate the first information comprises:
parsing information about a second protocol header of the service data to generate the first information; wherein
the second protocol header comprises at least one of following:
a slice header;
a network abstract layer NAL header;
a real-time transport protocol RTP header;
a user datagram protocol UDP header;
a transmission control protocol TCP header; and
an Internet protocol IP header.

10. The method according to any one of claims 7 to 9, wherein the sending, by a core network node, first information to an access network node comprises at least one of following:
performing, according to the first information, mapping on the service data to obtain a quality of service QoS flow, and sending, to the access network node, the QoS flow obtained through mapping, wherein the QoS flow carries the first information;
sending a general packet radio service tunneling protocol of a user plane GTP-U message to the access network node, wherein a header of the GTP-U message carries the first information; and
sending the first information to the access network node through a core access and mobility management function AMF.

11. The method according to claim 10, wherein the performing, according to the first information, mapping on the service data to obtain a QoS flow comprises:
mapping, according to a preset mapping rule, the service data to the QoS flow; wherein
the preset mapping rule comprises: mapping service data with a first priority to a target QoS flow, wherein
the target QoS flow is a first QoS flow, or the target QoS flow is a QoS flow corresponding to a first QoS flow indication QFI.

12. The method according to claim 7, wherein the first information comprises at least one of following:
a quality of service flow indication QFI;
an identifier of the service data;
a serial number of the service data;
a significance level of the service data;
delay information of the service data;
time stamp information of the service data;
synchronization information of the service data;
an association relationship between different service data; and
a serial number of a GTP-U.

13. A transmission processing apparatus, applied to an access network node, comprising:
an obtaining module, configured to obtain first information, wherein the first information is used for indicating a type and/or a characteristic of service data; and
a processing module, configured to perform, according to the first information, transmission processing on the service data; wherein
the service data is a data packet and/or a data frame.

14. The apparatus according to claim 13, wherein the first information comprises at least one of following:
a quality of service flow indication QFI;
an identifier of the service data;
a serial number of the service data;
a significance level of the service data;
delay information of the service data;
time stamp information of the service data;
synchronization information of the service data;
an association relationship between different service data; and
a serial number of a general packet radio service tunneling protocol of a user plane GTP-U.

15. The apparatus according to claim 13, wherein the processing module is configured to:
perform, according to a radio transmission policy, the transmission processing on the service data; wherein
the radio transmission policy comprises at least one of following:
preferentially transmitting service data with a first priority;
preferentially transmitting service data with first significance;
transmitting jointly associated service data;
delay scheduling first service data; and
discarding second service data.

16. The apparatus according to claim 15, wherein in a case that the radio transmission policy comprises the delay scheduling the first service data, the radio transmission policy further comprises: scheduling the first service data and third service data together.

17. The apparatus according to claim 13, wherein before the processing module performs, according to the first information, transmission processing on the service data, the apparatus further comprises:
a mapping module, configured to map, according to a preset rule, a quality of service QoS flow of the service data to a radio bearer; wherein
the preset rule comprises at least one of following:
mapping, based on the first information, QoS flows with different requirements to different radio bearers, wherein the radio bearers are in a one-to-one correspondence with radio link control RLC entities;
mapping QoS flows with different requirements to a same radio bearer, and mapping, based on the first information, service data with different QoS requirements to different RLC entities, wherein one radio bearer corresponds to a plurality of RLC entities; and
mapping QoS flows with different requirements to a same radio bearer, and configuring, based on the first information, different transmission configurations for service data with different QoS requirements.

18. The apparatus according to claim 13, wherein the obtaining module is configured to perform at least one of following:
receiving a QoS flow sent by a core network node, wherein the QoS flow carries the first information;
receiving a GTP-U message sent by a core network node, wherein a header of the GTP-U message carries the first information; and
receiving the first information sent by a core network node through a core access and mobility management function AMF.

19. An access network node, comprising a processor, a memory, and a program or instructions stored in the memory and executable on the processor, wherein when the program or the instructions are executed by the processor, steps of the transmission processing method according to any one of claims 1 to 6 are implemented.

20. A transmission processing apparatus, applied to a core network node, comprising:
a sending module, configured to send first information to an access network node; wherein
the first information is used for indicating a type and/or a characteristics of service data, the first information is used for assisting the access network node in performing transmission processing on the service data, and the service data is a data packet and/or a data frame.

21. The apparatus according to claim 20, wherein before the sending module sends the first information to the access network node, the apparatus further comprises:
a generation module, configured to parse the service data to generate the first information.

22. The apparatus according to claim 21, wherein the generation module is configured to:
parse information about a second protocol header of the service data to generate the first information; wherein
the second protocol header comprises at least one of following:
a slice header;
a network abstract layer NAL header;
a real-time transport protocol RTP header;
a user datagram protocol UDP header;
a transmission control protocol TCP header; and
an Internet protocol IP header.

23. The apparatus according to any one of claims 20 to 22, wherein the sending module is configured to perform at least one of following:
performing, according to the first information, mapping on the service data to obtain a quality of service QoS flow, and sending, to the access network node, the QoS flow obtained through mapping, wherein the QoS flow carries the first information;
sending a general packet radio service tunneling protocol of a user plane GTP-U message to the access network node, wherein a header of the GTP-U message carries the first information; and
sending the first information to the access network node through a core access and mobility management function AMF.

24. The apparatus according to claim 23, wherein a manner of performing, according to the first information, mapping on the service data to obtain a quality of service QoS flow comprises:
mapping, according to a preset mapping rule, the service data to the QoS flow; wherein
the preset mapping rule comprises: mapping service data with a first priority to a target QoS flow, wherein
the target QoS flow is a first QoS flow, or the target QoS flow is a QoS flow corresponding to a first QoS flow indication QFI.

25. The apparatus according to claim 20, wherein the first information comprises at least one of following:
a quality of service flow indication QFI;
an identifier of the service data;
a serial number of the service data;
a significance level of the service data;
delay information of the service data;
time stamp information of the service data;
synchronization information of the service data;
an association relationship between different service data; and
a serial number of a GTP-U.

26. A core network node, comprising a processor, a memory, and a program or instructions stored in the memory and executable on the processor, wherein when the program or the instructions are executed by the processor, steps of the transmission processing method according to any one of claims 7 to 12 are implemented.

27. A readable storage medium, storing a program or instructions, wherein when the program or the instructions are executed by a processor, steps of the transmission processing method according to any one of claims 1 to 12 are implemented.
